# EUROPÄISCHE PATENTSCHRIFT

(11) **EP 1 886 448 B1**
(45) Veröffentlichungstag und Bekanntmachung des Hinweises auf die Patenterteilung: **30.11.2011**
(21) Anmeldenummer: 05752946.3
(22) Anmeldetag: 01.06.2005
(51) Int. Cl.: H04L 12/40

(54) **UNIVERSELLES MESS- ODER SCHUTZGERÄT**
UNIVERSAL MEASUREMENT OR PROTECTIVE DEVICE
DISPOSITIF DE MESURE OU DE PROTECTION UNIVERSEL

(43) Veröffentlichungstag der Anmeldung: 13.02.2008
(73) Patentinhaber: SIEMENS AKTIENGESELLSCHAFT, 80333 München (DE)
(72) Erfinder: LANG, Gerhard, 14557 Wilhelmshorst (DE); NEUMANN, Götz, 13627 Berlin (DE)
(86) Internationale Anmeldenummer: PCT/DE2005/001004
(87) Internationale Veröffentlichungsnummer: WO 2006/128394

(56) Entgegenhaltungen:
- DE-A1- 10 014 052
- US-B1- 6 424 872
- US-B1- 6 456 222
- CHUNYAN ZANG ET AL: "The application of the virtual instrument technology in high voltage measuring system" IEEE/PES TRANSMISSION AND DISTRIBUTION CONFERENCE AND EXHIBITION 2002 : ASIA PACIFIC. YOKOHAMA, JAPAN, OCT. 6 - 10, 2002, IEEE/PES TRANSMISSION AND DISTRIBUTION CONFERENCE AND EXPOSITION, NEW YORK, NY : IEEE, US, Bd. VOL. 1 F 3, 6. Oktober 2002 (2002-10-06), Seiten 2300-2304, XP010630250 ISBN: 0-7803-7525-4

## Beschreibung

Die Erfindung bezieht sich auf ein Mess- oder Schutzgerät mit einer Schnittstelle, die zum Herstellen einer Verbindung mit zumindest einem Messwandler geeignet ist, und einer weiteren Schnittstelle, die zum Anschluss an einen übergeordneten Datenbus geeignet ist.

Derartige Mess- oder Schutzgeräte sind auf dem Gebiet der elektrischen Schutztechnik bekannt. Diese vorbekannten Mess- oder Schutzgeräte werden nicht unmittelbar, sondern über so genannte "Merging units" und Switches (z. B. Ethernet-Switches) an Messwandler angeschlossen. Die Funktion der "Merging units" besteht darin, phasenleiterbezogene Abtastwerte der Messwandler zu verarbeiten und mit diesen Datentelegramme zu bilden, die von dem jeweiligen Mess- oder Schutzgerät weiterverarbeitet werden können. Die phasenleiterbezogenen Abtastwerte beziehen sich - wie der Name bereits andeutet - auf Strom und/oder Spannung in den dem jeweiligen Messwandler zugeordneten Phasenleitern eines elektrischen Netzes.

Aus der DE 100 14 052 A1 geht eine Messeinrichtung für die Gebäudesystemtechnik hervor, bei der mittels integrierter analoger Stromwandler Signale erfasst und einem Mikrocontroller zur Auswertung zugeführt werden.

Ferner sind aus der Publikation "The Application of Virtual Instrument Technology in High Voltage Measuring System" IEEE/ PES TRANSMISSION AND DISTRIBUTION CONFERENCE AND EXHIBITION 2002: ASIA PACIFIC. YOKOHAMA, JAPAN, OCT. 6 - 10, 2002, IEEE/ PES TRANSMISSION AND DISTRIBUTION CONFERENCE AND EXPOSITION, NEW YORK, NY: IEEE, US, Bd. VOL. 1 F 3, 6. Oktober 2002, Seiten 2300-2304, XP010630250 ISBN: 0-7803-7525-4 Messsysteme bekannt, mit denen mehrere Messsignale erfasst und Befehle an die Messgeräte zurück übertragen werden können.

Der Erfindung liegt die Aufgabe zugrunde, ein Mess- oder Schutzgerät anzugeben, das sich besonders universell einsetzen lässt und das den Aufbau komplexer Schutzsysteme besonders kostengünstig ermöglicht.

Diese Aufgabe wird erfindungsgemäß durch ein Mess- oder Schutzgerät mit den Merkmalen gemäß Anspruch 1 gelöst. Vorteilhafte Ausgestaltungen des erfindungsgemäßen Mess- oder Schutzgeräts sind in Unteransprüchen angegeben.

Danach ist erfindungsgemäß vorgesehen, dass in dem Mess- oder Schutzgerät eine mit den beiden Schnittstellen in Verbindung stehende Kommunikationseinheit vorhanden ist, die über die eine Schnittstelle zum Empfang von phasenleiterbezogene Abtastwerte (U, I) enthaltenden Abtastwert-Telegrammen (Tp) unmittelbar mit dem Messwandler und über die weitere Schnittstelle zur Übertragung von abtastzeitpunktbezogenen Telegrammen (Ts) unmittelbar mit dem übergeordneten Datenbus verbindbar ist und die mit phasenleiterbezogenen Abtastwerten des Messwandlers abtastzeitpunktbezogene Telegramme bildet und diese an den übergeordneten Datenbus übermittelt und damit für weitere Abnehmer bereitstellt.

Ein wesentlicher Vorteil des erfindungsgemäßen Mess- oder Schutzgeräts ist darin zu sehen, dass dieses einen unmittelbaren Anschluss sowohl an einen übergeordneten Datenbus als auch an einen oder mehrere Messwandler ermöglicht. Das unmittelbare Anschließen des Mess- oder Schutzgeräts wird durch die erfindungsgemäße Kommunikationseinheit ermöglicht, die in der Lage ist, die phasenleiterbezogenen Abtastwerte des Messwandlers unmittelbar zu verarbeiten und mit diesen abtastzeitpunktbezogene Telegramme zu bilden. Mit anderen Worten ist bei dem erfindungsgemäßen Mess- oder Schutzgerät die Funktion der im Zusammenhang mit dem vorbekannten Stand der Technik erwähnten baulich separaten "Merging units" und "Switches" in die Kommunikationseinheit verlegt, so dass das erfindungsgemäße Mess- oder Schutzgerät im Unterschied zum Stand der Technik einen unmittelbaren Anschluss an Messwandler erlaubt.

Gemäß einer vorteilhaften Ausgestaltung des Mess- oder Schutzgeräts ist vorgesehen, dass die beiden Schnittstellen Datenbus-Schnittstellen bilden; beispielsweise ist die eine Schnittstelle zum Anschluss an einen Prozessbus und die weitere Schnittstelle zum Anschluss an einen Stationsbus geeignet.

Als besonders vorteilhaft wird es angesehen, wenn das Mess- oder Schutzgerät zwei 3-Port-Netzwerkanschaltungen mit jeweils zwei externen und einem internen Port aufweist, wobei die beiden externen Ports der einen 3-Port-Netzwerkanschaltung die eine Schnittstelle und die beiden externen Ports der anderen 3-Port-Netzwerkanschaltung die andere Schnittstelle bilden und wobei die beiden internen Ports der zwei 3-Port-Netzwerkanschaltungen mit der Kommunikationseinheit verbunden sind. 3-Port-Netzwerkanschaltungen ermöglichen wegen der beiden externen Ports einen Vollduplex-Betrieb des Datenbusses, so dass eine besonders große Ausfallsicherheit erreicht wird. Geeignete 3-Port-Netzwerkanschaltungen sind beispielsweise in der deutschen Offenlegungsschrift DE 102 60 806 A1 beschrieben. Vorzugsweise sind die beiden externen Ports der einen Netzwerkanschaltung zum unmittelbaren Anschluss an einen Prozessbus und die die beiden externen Ports der anderen Netzwerkanschaltung zum unmittelbaren Anschluss an einen Stationsbus geeignet.

Besonders kostengünstig lässt sich das Mess- oder Schutzgerät herstellen, wenn die Kommunikationseinheit und die beiden Netzwerkanschaltungen in einem frei programmierbaren Gatearray, beispielsweise monolithisch, integriert werden.

Vorzugsweise ist die Kommunikationseinheit derart ausgestaltet, dass sie mit den am internen Port der einen Netzwerkanschaltung anliegenden phasenleiterbezogenen Abtastwerten abtastzeitpunktbezogene Telegramme bildet und diese an den internen Port der anderen Netzwerkanschaltung ausgibt.

Bevorzugt reduziert die Kommunikationseinheit die Abtastrate der am internen Port der einen Netzwerkanschaltung anliegenden phasenleiterbezogenen Abtastwerte. Beispielsweise zieht sie zur Bildung der abtastzeitpunktbezogenen Telegramme die phasenleiterbezogenen Abtastwerte mit deren reduzierter Abtastrate heran; alternativ erfolgt die Datenreduktion nach oder während der Telegrammbildung.

Beispielsweise ist die Kommunikationseinheit derart ausgestaltet, dass sie die Abtastrate der am internen Port der einen Netzwerkanschaltung anliegenden phasenleiterbezogenen Abtastwerte reduziert, indem sie ausschließlich jeden n-ten Abtastwert weiterverwendet und alle übrigen Abtastwerte unberücksichtigt lässt, wobei n größer als zwei ist.

Alternativ kann die Kommunikationseinheit auch derart ausgestaltet sein, dass sie mit den am internen Port der einen Netzwerkanschaltung anliegenden phasenleiterbezogenen Abtastwerten Zeigerwerte bildet und diese zur Bildung der abtastzeitpunktbezogenen Zeiger-Telegramme heranzieht.

Im Übrigen wird es als vorteilhaft angesehen, wenn die Kommunikationseinheit die am internen Port der einen Netzwerkanschaltung anliegenden phasenleiterbezogenen Abtastwerte einem erneuten Abtastvorgang unterwirft.

Ein solcher "erneuter" Abtastvorgang kann beispielsweise derart erfolgen, dass die Kommunikationseinheit mit den am internen Port der einen Netzwerkanschaltung anliegenden phasenleiterbezogenen Abtastwerten den zeitlichen Verlauf des abgetasteten elektrischen Signals (Strom oder Spannung des jeweiligen Phasenleiters) rekonstruiert, das rekonstruierte Signal mit einer sich von der ursprünglichen Abtastrate unterscheidenden zweiten Abtastrate erneut abtastet, diese so gebildeten neuen Abtastwerte zur Telegrammbildung heranzieht und die Telegramme an den internen Port der anderen Netzwerkanschaltung ausgibt.

Zur Bildung der neuen Abtastwerte weist die Kommunikationseinheit vorzugsweise zumindest einen digitalen Signalprozessor auf.

Zur Übertragung der Daten arbeiten die beiden Schnittstellen des Mess- oder Schutzgeräts vorzugsweise nach dem IEC 61850-Standard; die Synchronisierung der Abtastzeitpunkte erfolgt nach dem IEEE 1588-Standard. Vorzugsweise führt die Kommunikationseinheit die Bildung der Telegramme im Hinblick auf die die Abtastwerte betreffenden Informationen nach den Regeln des IEC 61850-Standards durch. Im Hinblick auf alle übrigen Informationen - also alle Informationen außer den die Abtastwerte betreffenden Informationen - führt die Kommunikationseinheit die Bildung der Telegramme vorzugsweise nach dem IEC 61850-8-1-Standard durch.

Der Prozessbus und der Stationsbus arbeiten bevorzugt nach einem Real-Time-Ethernet-Standard (vgl. Schutzrechte bzw. Schutzrechtsanmeldungen CN 1476702, DE 10058524, EP 1388238, JP 2004515122; US 2002064157; WO 200243336; DE 10147422; EP 1430628; US 2004249982; WO 2003028259); demgemäß sind die beiden Netzwerkanschaltungen vorzugsweise jeweils zum Anschluss an einen Real-Time-Ethernet-Ring geeignet.

Die Erfindung bezieht sich außerdem auf ein Schutzsystem mit einem Mess- oder Schutzgerät, einem Messwandler und einem übergeordneten Leitsystem.

Der Erfindung liegt bezüglich eines solchen Schutzsystems die Aufgabe zugrunde, eine besonders kostengünstige Realisierbarkeit zu erreichen.

Diese Aufgabe wird erfindungsgemäß durch ein Schutzsystem mit einem Mess- oder Schutzgerät, einem Messwandler und einem übergeordneten Datenbus gelöst, wobei das Mess- oder Schutzgerät mit seinen beiden externen Ports einer 3-Port-Netzwerkanschaltung über einen Prozessbus an den Messwandler und mit seinen beiden externen Ports einer anderen 3-Port-Netzwerkanschaltung über einen Stationsbus an das übergeordnete Leitsystem angeschlossen ist.

Bezüglich der Vorteile des erfindungsgemäßen Schutzsystems sei auf die obigen Ausführungen im Zusammenhang mit dem erfindungsgemäßen Mess- oder Schutzgeräts verwiesen.

Die Erfindung wird nachfolgend anhand eines Ausführungsbeispiels erläutert; dabei zeigen
- Figur 1: ein Schutzsystem mit zwei Messgeräten nach dem Stand der Technik und
- Figur 2: ein Ausführungsbeispiel eines erfindungsgemäßen Schutzsystems mit einem Ausführungsbeispiel eines erfindungsgemäßen Mess- und/oder Schutzgerätes.

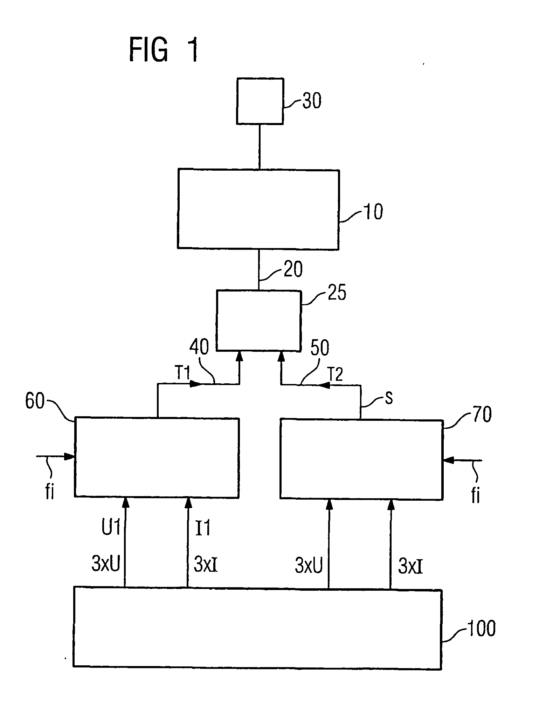

In der Figur 1 ist ein Schutzsystem nach dem Stand der Technik gezeigt. Man erkennt ein Schutzgerät 10, das mit einem übergeordneten Datenbus 30 in Verbindung steht. Das Schutzgerät 10 ist über eine Datenleitung 20 an einen Ethernet-Switch (Ethernet-Telegrammverteiler) 25 angeschlossen, der mittels weiterer Datenleitungen 40 und 50 außerdem mit "merging units" 60 und 70 verbunden ist. Unter dem Begriff "merging unit" werden nachfolgend Einrichtungen verstanden, die eingangsseitig anliegende Daten - hier Strom- und Spannungsabtastwerte U und I - zusammenfassen und ausgangsseitig als Datentelegramme weiterleiten.

Beide "merging units" 60 und 70 stehen jeweils mit sechs Messwandlern in Verbindung, und zwar jeweils mit drei Stromwandlern und jeweils mit drei Spannungswandlern. Die Messwandler sind in der Figur 1 pauschal durch einen Block 100 visualisiert.

Das Schutzsystem gemäß Figur 1 arbeitet wie folgt:

Die "merging unit" 60 empfängt von den Messwandlern 100 phasenleiterbezogene Abtastwerte Ul und 11 und verarbeitet diese zu Datentelegrammen T1, die sie über die Datenleitung 40 zum Ethernet-Switch 25 überträgt; der Ethernet-Switch 25 leitet die Datentelegramme T1 nachfolgend an das Schutzgerät 10 weiter. Die Aufgabe der "merging unit" 60 besteht dabei darin, eine Art "Datenzusammenführung" durchzuführen, um die Datentelegramme T1 zu bilden. Die in dieser Weise gebildeten Datentelegramme T1 werden zum Schutzgerät 10 übertragen und dort ausgewertet. Das Schutzgerät 10 übermittelt die Datentelegramme T1 anschließend an den übergeordneten Datenbus 30 und somit an weitere Abnehmer.

Um zu erreichen, dass die beiden "merging units" 60 und 70 ihre Datentelegramme T1 bzw. T2 synchron zueinander erzeugen, werden die beiden "merging units" 60 und 70 jeweils mit Synchronisationsimpulsen fi synchronisiert, wozu zusätzliche in der Figur 1 nicht gezeigte Einrichtungen erforderlich sind.

Zusammengefasst ist bei dem Schutzsystem gemäß Figur 1 eine unmittelbare Anbindung des Schutzgeräts 10 an die Messwandler 100 nicht möglich, da zwischen Schutzgerät und Messwandler stets zumindest eine "merging unit" und ein Ethernet-Switch zwischenzuschalten sind.

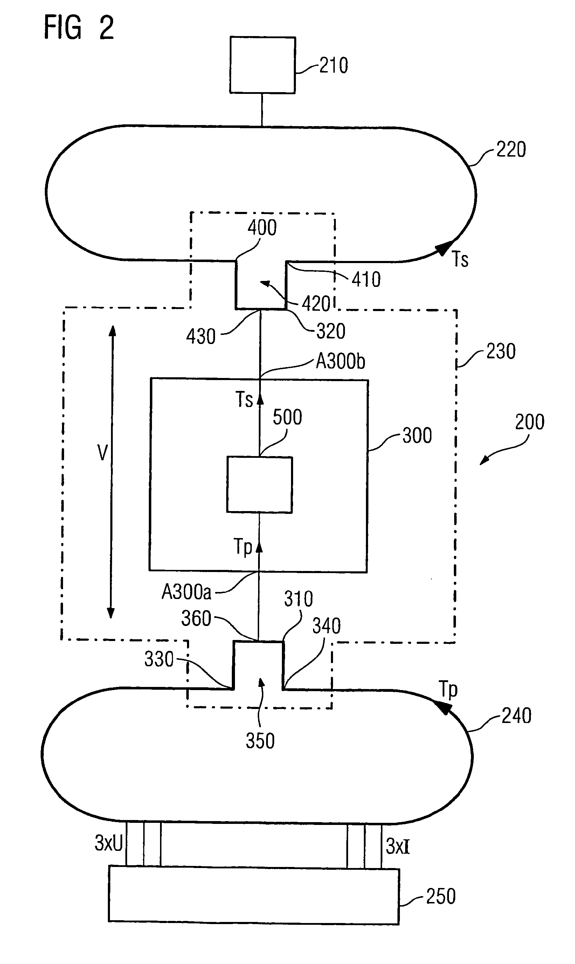

In der Figur 2 ist ein Ausführungsbeispiel eines erfindungsgemäßen Schutzsystems 200 dargestellt. Das Schutzsystem 200 weist ein übergeordnetes Leitsystem 210 auf, das über einen übergeordneten Datenbus 220 - nachfolgend Stationsbus genannt - mit einem Mess- und/oder Schutzgerät 230 verbunden ist. Bei der Darstellung gemäß der Figur 2 ist aus Gründen der Übersichtlichkeit lediglich ein einziges solches Mess- und/oder Schutzgerät 230 dargestellt, selbstverständlich können an den Stationsbus 220 auch mehrere Mess- und/oder Schutzgeräte 230 angeschlossen sein, die die auf dem Stationsbus 220 vorhandenen Telegramme empfangen und auswerten.

Das Mess- und/oder Schutzgerät 230 ist darüber hinaus mit einem weiteren Datenbus 240 - nachfolgend Prozessbus genannt - verbunden, der eine Verbindung des Mess- und/oder Schutzgerätes 230 mit einem oder mehreren Messwandlern 250 ermöglicht. Die Messwandler 250 sind an in der Figur 2 nicht gezeigte Phasenleiter eines elektrischen Netzes mit einer Netzfrequenz von 50 Hz oder 60 Hz angeschlossen.

Die Figur 2 zeigt darüber hinaus den inneren Aufbau des Mess- und/oder Schutzgerätes 230. Man erkennt eine Kommunikationseinheit 300, die mit zwei vollduplex-fähigen, im Mess- und/oder Schutzgerät baulich enthaltenen 3-Port-Netzwerkanschaltungen 310 und 320 in Verbindung steht. Bei den 3-Port-Netzwerkanschaltungen 310 und 320 kann es sich beispielsweise um solche handeln, die in der deutschen Offenlegungsschrift DE 102 60 806 A1 beschrieben sind.

Die eine der beiden 3-Port-Netzwerkanschaltungen 310 weist zwei externe Ports 330 und 340 auf, die eine Schnittstelle 350 zum Anschluss des Mess- und/oder Schutzgerätes 230 an den Prozessbus 240 erlauben. Unter dem Begriff "Port" ist also ein elektrischer Bus-Anschluss bzw. eine Bus-Schnittstelle zu verstehen. Ein innerer Port 360 der einen 3-Port-Netzwerkanschaltung 310 steht mit einem prozessbusseitigen Anschluss A300a der Kommunikationseinheit 300 in Verbindung.

Die weitere 3-Port-Netzwerkanschaltung 320 weist ebenfalls zwei externe Ports 400 und 410 auf; diese externen Ports 400 und 410 bilden eine Schnittstelle 420 zum Anschluss des Mess- und/oder Schutzgerätes 230 an den Stationsbus 220. Ein innerer Port 430 der weiteren 3-Port-Netzwerkanschaltung 320 steht mit einem stationsbusseitigen Anschluss A300b der Kommunikationseinheit 300 in Verbindung.

Die beiden 3-Port-Netzwerkanschaltungen 310 und 320 sowie die Kommunikationseinheit 300 sind in der Figur 2 als getrennte Elemente gezeigt, die in dem Mess- und/oder Schutzgerät 230 enthalten sind. Vorzugsweise sind die beiden 3-Port-Netzwerkanschaltungen 310 und 320 und die Kommunikationseinheit 300 durch eine einzige bauliche Einheit, vorzugsweise durch ein frei programmierbares Gatearray, beispielsweise ein monolithisch integriertes Array, gebildet.

Das Schutzsystem 200 gemäß Figur 2 arbeitet wie folgt:

Die Messwandler 250 erzeugen phasenleiterbezogene Abtastwerte U und I, die über den Prozessbus 240 zum Mess- und/oder Schutzgerät 230 übertragen werden. Die Übertragung der phasenleiterbezogenen Abtastwerte U und I erfolgt auf dem Prozessbus 240 nach einem Real-Time-Ethernet-Verfahren (vgl. Schutzrechte bzw. Schutzrechtsanmeldungen CN 1476702, DE 10058524, EP 1388238, JP 2004515122; US 2002064157; WO 200243336; DE 10147422; EP 1430628; US 2004249982; WO 2003028259) sowie nach dem IEC 61850-Standard. Konkret werden die Abtastwerte U und I in Form von Telegrammen Tp übertragen, die nach den Regeln des Standards IEC 61850 gebildet sind. Im Übrigen, also bezüglich anderer Daten als den Abtastwerten, erfolgt die Telegrammbildung nach dem Standard IEC 61850-8-1.

Der Stationsbus 220 arbeitet genauso wie der Prozessbus 240, also ebenfalls nach einem Real-Time-Ethernet-Verfahren sowie nach dem IEC 61850-Standard. Die beiden Datenbusse 220 und 240 werden jeweils im Vollduplex-Betrieb betrieben; dies ist möglich, da jede der beiden 3-Port-Netzwerkanschaltungen 310 und 320 jeweils zwei ausgangsseitige Ports zum Anschluss an den jeweiligen Datenbus aufweist.

Die Bildung der Abtastwert-Telegramme Tp erfolgt unter Zugrundelegung eines Zeittaktes, der eine zeitliche Genauigkeit von einer Mikrosekunde aufweist.

Bei der Übertragung der Abtastwerte U und I über den Prozessbus 240 wird jedem Abtastwert jeweils ein Zeitstempel (z. B. "sample counter"-Wert) beigefügt. Der "sample-counter-Wert" gibt an, in welchem Zeitschlitz zum Sekundensprung des Synchronisationstaktes der jeweilige phasenleiterbezogene Abtastwert gebildet worden ist. Da der Bustakt auf eine Mikrosekunde genau eingestellt wird, lässt sich für jeden übertragenen Abtastwert mit einer Genauigkeit von einer Mikrosekunde der jeweilige Abtastzeitpunkt feststellen.

Im Mess- und/oder Schutzgerät 230 kommt eine Vielzahl an phasenleiterbezogenen Abtastwerten U und I an, die zu unterschiedlichen Zeitpunkten ermittelt worden sind und demgemäß unterschiedliche "sample-counter-Werte" enthalten. Das Mess- und/oder Schutzgerät 230 sortiert die phasenleiterbezogenen Abtastwerte U und I nach ihrem jeweiligen Zeitschlitz bzw. nach ihrem jeweiligen "sample-counter-Wert" und erzeugt mit diesen Abtastwerten Datentelegramme Ts, die sich jeweils auf ein- und denselben Abtastzeitpunkt bzw. auf ein- und denselben "sample-counter-Wert" beziehen. Die entsprechend gebildeten Telegramme Ts werden in Richtung Stationsbus 220 mittels der weiteren 3-Port-Netzwerkanschaltung 320 übertragen.

Bei der Bearbeitung der phasenleiterbezogenen Abtastwerte U und I der Messwandler 250 führt das Mess- und/oder Schutzgerät 230 vorzugsweise ein "downsampling" durch. Dies bedeutet, dass die Anzahl der Abtastwerte, die von den Messwandlern 250 geliefert werden, vor der Weiterleitung an den Stationsbus 220 reduziert werden, indem beispielsweise neun von zehn Abtastwerte der Messwandler 250 weggeworfen und nur jeweils ein einziger Abtastwert aufgehoben wird. Beträgt die Abtastrate bei den Messwandlern 250 beispielsweise 10 kHz oder 20 kHz, so wird auf dem Stationsbus in Form der Telegramme Ts lediglich eine Abtastrate von 1 bzw. 2 kHz weitergeleitet. Trotz der Reduktion der Abtastrate bleibt dennoch eine "Transparenz" der Messwerte - vom übergeordneten Leitsystem 210 aus gesehen - erhalten, weil trotz des Übertragens nur jedes zehnten Abtastwertes vom Stationsbus 220 noch ausreichend Messwerte zur Verfügung gestellt werden, die die jeweilige Messwertsituation bei jedem der Messwandler 250 hinreichend charakterisieren. Die resultierende Transparenz ist in der Figur 2 schematisch durch das Bezugszeichen V gekennzeichnet.

Anstelle der beschriebenen Abtastwertreduktion, bei der nur jeder n-te (z. B. n = 10) Abtastwert weiter verwendet wird, kann eine Datenreduktion auch durch eine Umwandlung der Abtastwerte in komplexe Messwertzeiger erfolgen. Bei dieser Variante ermittelt das Mess- und/oder Schutzgerät 230 aus den empfangenen phasenleiterbezogenen Abtastwerten U und I der Messwandler 250 komplexe Messwertzeiger, die den Betrag und die Phase des Stromes bzw. der Spannung auf den zugeordneten Phasenleitern angeben.

Bei einer solchen Datenreduktion durch "Zeigerumwandlung" lässt sich die Datenrate sehr deutlich reduzieren, so dass beispielsweise eine Übertragungsrate von 50 Hz ausreicht, um die Messwerte der Stromwandler 250 zu charakterisieren.

Im Mess- und/oder Schutzgerät 230 bzw. in der Kommunikationseinheit 300 des Mess- und/oder Schutzgerätes 230 kann darüber hinaus eine Frequenznachführung erfolgen, indem aus den zeit- und phasenleiterbezogenen Abtastwerten U und I der Messwandler 250 zunächst der zeitliche Verlauf des jeweils abgetasteten elektrischen "Netz"-Signals rekonstruiert wird. Anschließend wird der so rekonstruierte Zeitverlauf erneut abgetastet, also "resampled". Durch eine solches "resampling" - also ein wiederholtes Abtasten - lässt sich ein anderes Zeitnormal einführen, so dass sich die Abtastwerte auf einen neuen Abtasttakt, nämlich den Abtasttakt des Resample-Vorgangs, beziehen.

Ein solches neues Zeitnormal ermöglicht eine Frequenznachführung und ist beispielsweise sinnvoll, wenn seitens des Stationsbusses 220 die Übertragung der Abtastwerte in Abhängigkeit von der jeweiligen Netzfrequenz abhängen soll: Verändert sich beispielsweise die Netzfrequenz des Netzes von 50 Hz auf 51 Hz, so würden sich bei einem festen Abtasttakt die Abtastwerte relativ zum zeitlichen Verlauf des Messsignals verschieben. Soll nun eine Verteilung der Abtastwerte erreicht werden, die an die jeweilige Netzfrequenz des Messsignals angepasst ist, so verteilt die Kommunikationseinheit 300 die vorgegebene Anzahl an Abtastwerten pro Periode auf die jeweilige Periodendauer des gemessenen Messsignals und passt somit die Verteilung der Abtastwerte an die jeweilige Netzfrequenz an. Eine Frequenznachführung kann beispielsweise erforderlich sein, wenn seitens des Stationsbusses 220 frequenznachgeführte Abtastwerte verlangt werden und wenn prozessbusseitig lediglich zeitlich festliegende Abtastwerte geliefert werden.

Wie bereits erwähnt, werden die beiden Datenbusse 220 und 240 vorzugsweise mit einem Bustakt betrieben, der sehr viel höher ist als die Grundfrequenz der zu charakterisierenden Messsignale bzw. als die Netzfrequenz des elektrischen Netzes. Beispielsweise lässt sich bei einem Bustakt, der auf eine Mikrosekunde zeitlich genau eingestellt wird, eine sehr gute Abtastwertbildung erreichen.

Um zu vermeiden, dass bei einer Unterbrechung der Ringstruktur der beiden Datenbusse 220 und 240 ein Datenverlust auftreten kann, arbeiten die beiden Datenbusse 220 und 240, wie bereits erwähnt, vorzugsweise in einem Vollduplex-Betrieb.

Zusammengefasst lässt sich feststellen, dass das Schutzsystem 200 gemäß Figur 2 aufgrund der beschriebenen Ausgestaltung des Mess- und/oder Schutzgerätes 230 ein quasi transparentes Durchreichen von Daten zwischen Prozessbus 240 und Stationsbus 220 ermöglicht, wobei dennoch eine Entkopplung der Abtastwerte zwischen den beiden Datenbussen durch die Kommunikationseinheit 300 sichergestellt wird; die Kommunikationseinheit 300 führt - wie erläutert - dabei eine "merging-Funktion" durch, indem sie die von den Messwandlern 250 gelieferten phasenleiter- und zeitbezogenen Abtastwerte U und I weiter verarbeitet und mit diesen die abtastzeitpunktbezogenen Telegramme Ts zur Weiterleitung an den Stationsbus 220 herstellt. Zum "merging-Prozess" ist die Kommunikationseinheit 300 vorzugsweise mit einem oder mehreren digitalen Signalprozessoren ausgestattet; ein solcher Signalprozessor ist in der Figur 2 beispielhaft mit dem Bezugszeichen 500 gekennzeichnet.

Zusammenfassend erfüllt das Schutzsystem 200 gemäß Figur 2 somit folgende Kriterien:
- Es wird eine Synchronisierung der phasenleiter- und zeitbezogenen Abtastwerte der Messwandler 250 im Mikrosekundenbereich aufgrund der Verwendung der Standards IEEE 1588 erreicht;
- es wird ein deterministisches Übertragungsverhalten durch Anwendung des beschriebenen Real-Time-Ethernet-Übertragungsverfahrens mit Zeitsynchronisierung gemäß IEEE 1588 erreicht;
- es besteht eine Ringredundanz aufgrund des Vollduplex-Betriebes der beiden Datenbusse 220 und 240, wodurch die Ausfallsicherheit erhöht wird;
- es wird eine Entkopplung zwischen den beiden Kommunikationsringstrukturen 220 und 240 erreicht, und zwar im Hinblick auf eine entkoppelte Übertragung der digitalen Wandlerdaten der Messwandler 250 zum übergeordneten Leitsystem 210;
- beide Datenbusse 220 und 240 weisen eine integrierte Switch-Funktionalität, beispielsweise eine Ethernet-Switch-Funktionalität auf.

Aufgrund der genannten Merkmale ermöglicht das Schutzsystem 200 sowohl auf Prozessbus- als auch auf Stationsbusniveau eine für jeden Abtastzeitpunkt synchronisierte Übertragung der Abtastwerte der Messwandler 250. Die Synchronisation der Abtastwerte erfolgt auf Stationsbusniveau feldübergreifend und auf Prozessbusniveau feldintern jeweils über alle Messpunkte bzw. Messwandler. Die Synchronisation zwischen dem Stationsbus 220 und dem jeweiligen Prozessbus 240 wird dabei durch die Kommunikationseinheit 300 des die beiden Datenbusse 220 und 240 verbindenden Mess- und/oder Schutzgeräts 230 sichergestellt.

### Bezugszeichenliste

- 10: Mess- und/oder Schutzgerät
- 20: Datenleitung
- 25: Ethernet-Switch
- 30: übergeordneter Datenbus
- 40: Datenleitung
- 50: Datenleitung
- 60: merging unit
- 70: merging unit
- 100: Messwandler
- 200: Schutzsystem
- 210: übergeordnetes Leitsystem
- 220: Stationsbus
- 230: Mess- und/oder Schutzgerät
- 240: Prozessbus
- 250: Messwandler
- 300: Kommunikationseinheit
- 310: 3-Port-Netzwerkanschaltung
- 320: weitere 3-Port-Netzwerkanschaltung
- 330,340: externe Ports der einen 3-Port-Netzwerkanschaltung
- 350: eine Schnittstelle
- 360: interner Port der einen 3-Port-Netzwerkanschaltung
- 400,410: externe Ports der weiteren 3-Port-Netzwerkanschaltung
- 420: weitere Schnittstelle
- 430: interner Port der weiteren 3-Port-Netzwerkanschaltung
- 500: Signalprozessor
- U,I: Strom- und Spannungsabtastwerte
- fi: Synchronisationsimpuls
- Ts, Tp: Telegramme

## Patentansprüche

1. Mess- oder Schutzgerät (230)
- mit einer Schnittstelle (350) zum Herstellen einer Verbindung mit zumindest einem Messwandler (250) und mit einer weiteren Schnittstelle (420) zum Anschluss an einen übergeordneten Datenbus (220),
- wobei in dem Mess- oder Schutzgerät (230) eine mit den beiden Schnittstellen (350, 420) in Verbindung stehende Kommunikationseinheit (300) vorhanden ist, **dadurch gekennzeichnet, dass** die Kommunikationseinheit (300) über die eine Schnittstelle (350) zum Empfang von phasenleiterbezogene Abtastwerte (U, I) enthaltenden Abtastwert-Telegrammen (Tp) unmittelbar mit dem Messwandler (250) und über die weitere Schnittstelle (420) zur Übertragung von abtastzeitpunktbezogenen Telegrammen (Ts) mit dem übergeordneten Datenbus (220) verbindbar ist und die mit phasenleiterbezogenen Abtastwerten (U, I) des Messwandlers (250) abtastzeitpunktbezogene Telegramme (Ts) bildet und diese an den übergeordneten Datenbus (220) übermittelt.

2. Mess- oder Schutzgerät nach Anspruch 1,
**dadurch gekennzeichnet, dass**
die beiden Schnittstellen Datenbus-Schnittstellen bilden.

3. Mess- oder Schutzgerät nach Anspruch 2,
**dadurch gekennzeichnet, dass**
- das Mess- oder Schutzgerät zwei 3-Port-Netzwerkanschaltungen (310, 320) mit jeweils zwei externen und einem internen Port aufweist,
- wobei die beiden externen Ports (330, 340) der einen 3-Port-Netzwerkanschaltung (320) die eine Schnittstelle (350) und die beiden externen Ports (400, 410) der anderen 3-Port-Netzwerkanschaltung (320) die andere Schnittstelle (420) bilden und
- wobei die beiden internen Ports (360, 430) der zwei 3-Port-Netzwerkanschaltungen mit der Kommunikationseinheit (300) verbunden sind.

4. Mess- oder Schutzgerät nach Anspruch 3,
**dadurch gekennzeichnet, dass**
die beiden externen Ports (330, 340) der einen Netzwerkanschaltung (320) zum Anschluss an einen Prozessbus (240) und die die beiden externen Ports (400, 410) der anderen Netzwerkanschaltung (320) zum Anschluss an einen Stationsbus (220) geeignet sind.

5. Mess- oder Schutzgerät nach einem der voranstehenden Ansprüche,
**dadurch gekennzeichnet, dass**
die Kommunikationseinheit und die beiden Netzwerkanschaltungen in einem frei programmierbaren Gatearray integriert sind.

6. Mess- oder Schutzgerät nach einem der Ansprüche 3 bis 5,
**dadurch gekennzeichnet, dass**
die Kommunikationseinheit derart ausgestaltet ist, dass sie mit den am internen Port der einen Netzwerkanschaltung anliegenden phasenleiterbezogenen Abtastwerten abtastzeitpunktbezogene Telegramme bildet und diese an den internen Port der anderen Netzwerkanschaltung ausgibt.

7. Mess- oder Schutzgerät nach Anspruch 6,
**dadurch gekennzeichnet, dass**
die Kommunikationseinheit derart ausgestaltet ist, dass sie die Abtastrate der am internen Port der einen Netzwerkanschaltung anliegenden phasenleiterbezogenen Abtastwerte reduziert.

8. Mess- oder Schutzgerät nach Anspruch 7,
**dadurch gekennzeichnet, dass**
die Kommunikationseinheit derart ausgestaltet ist, dass sie die Abtastrate der am internen Port der einen Netzwerkanschaltung anliegenden phasenleiterbezogenen Abtastwerte reduziert, indem sie ausschließlich jeden n-ten Abtastwert weiterverwendet und alle übrigen Abtastwerte unberücksichtigt lässt, wobei n größer als zwei ist.

9. Mess- oder Schutzgerät nach Anspruch 6,
**dadurch gekennzeichnet, dass**
die Kommunikationseinheit derart ausgestaltet ist, dass sie mit den am internen Port der einen Netzwerkanschaltung anliegenden phasenleiterbezogenen Abtastwerten Zeigerwerte bildet und diese zur Bildung der abtastzeitpunktbezogenen Telegramme heranzieht.

10. Mess- oder Schutzgerät nach einem der Ansprüche 3 bis 9,
**dadurch gekennzeichnet, dass**
die Kommunikationseinheit derart ausgestaltet ist, dass sie die am internen Port der einen Netzwerkanschaltung anliegenden phasenleiterbezogenen Abtastwerte einem erneuten Abtastvorgang unterwirft.

11. Mess- oder Schutzgerät nach Anspruch 10,
**dadurch gekennzeichnet, dass**
die Kommunikationseinheit derart ausgestaltet ist, dass sie mit den am internen Port der einen Netzwerkanschaltung anliegenden phasenleiterbezogenen Abtastwerten den zeitlichen Verlauf des vom Messwandler (250) abgetasteten elektrischen Signals rekonstruiert, das rekonstruierte Signal mit einer sich von der ursprünglichen Abtastrate unterscheidenden zweiten Abtastrate erneut abtastet, diese so gebildeten neuen Abtastwerte zur Telegrammbildung heranzieht und diese Telegramme (Ts) an dem internen Port der anderen Netzwerkanschaltung ausgibt.

12. Mess- oder Schutzgerät nach einem der voranstehenden Ansprüche,
**dadurch gekennzeichnet, dass**
die Kommunikationseinheit einen digitalen Signalprozessor (500) zur Bildung der abtastzeitpunktbezogenen Telegramme (Ts) aufweist.

13. Mess- oder Schutzgerät nach einem der voranstehenden Ansprüche,
**dadurch gekennzeichnet, dass**
die eine und/oder die weitere Schnittstelle kompatibel zum Real-Time-Ethernet-Standard, zum IEC 61850-Standard und/oder zum IEEE 1588-Standard arbeiten.

14. Mess- oder Schutzgerät nach einem der voranstehenden Ansprüche,
**dadurch gekennzeichnet, dass**
die Kommunikationseinheit derart ausgestaltet ist, dass sie die Bildung der Telegramme im Hinblick auf die die Abtastwerte betreffenden Informationen nach den Regeln des IEC61850-Standards durchführt.

15. Mess- oder Schutzgerät nach einem der voranstehenden Ansprüche,
**dadurch gekennzeichnet, dass**
die Kommunikationseinheit derart ausgestaltet ist, dass sie die Bildung der Telegramme im Hinblick auf alle übrigen Informationen außer den die Abtastwerte betreffenden Informationen nach dem IEC61850-8-1-Standard durchführt.

16. Mess- oder Schutzgerät nach einem der voranstehenden Ansprüche,
**dadurch gekennzeichnet, dass**
die beiden Netzwerkanschaltungen zum Anschluss an einen Real-Time-Ethernet-Ring geeignet sind.

17. Schutzsystem (200) mit einem Mess- oder Schutzgerät (230) nach einem voranstehenden Ansprüche, einem Messwandler (250) und einem übergeordneten Datenbus (220),
**dadurch gekennzeichnet, dass**
- das Mess- oder Schutzgerät (230) mit seinen beiden externen Ports (330, 340) einer 3-Port-Netzwerkanschaltung (310) über einen Prozessbus (240) an den Messwandler (250) und mit seinen beiden externen Ports (400, 410) einer anderen 3-Port-Netzwerkanschaltung (320) an einen Stationsbus (220) als übergeordneten Datenbus angeschlossen ist.

## Claims

1. Measurement or protective device (230)
- having an interface (350) for establishing a connection to at least one measurement transducer (250) and having a further interface (420) for connection to a superordinate data bus (220),
- the measurement or protective device (230) containing a communication unit (300) which is connected to the two interfaces (350, 420), **characterized in that** the communication unit (300) can be directly connected to the measurement transducer (250) by means of one interface (350) for receiving sample messages (Tp) containing phase-conductor-related samples (U, I) and can be connected to the superordinate data bus (220) by means of the further interface (420) for transmitting sampling-time-related messages (Ts) and uses phase-conductor-related samples (U, I) from the measurement transducer (250) to form sampling-time-related messages (Ts) and transmits the latter to the superordinate data bus (220).

2. Measurement or protective device according to Claim 1,
**characterized in that**
the two interfaces form data bus interfaces.

3. Measurement or protective device according to Claim 2,
**characterized in that**
- the measurement or protective device has two 3-port network connections (310, 320) each having two external ports and one internal port,
- the two external ports (330, 340) of one 3-port network connection (320) forming one interface (350) and the two external ports (400, 410) of the other 3-port network connection (320) forming the other interface (420), and
- the two internal ports (360, 430) of the two 3-port network connections being connected to the communication unit (300).

4. Measurement or protective device according to Claim 3,
**characterized in that** the two external ports (330, 340) of one network connection (320) are suitable for connection to a process bus (240) and the two external ports (400, 410) of the other network connection (320) are suitable for connection to a station bus (220).

5. Measurement or protective device according to one of the preceding claims,
**characterized in that**
the communication unit and the two network connections are integrated in a freely programmable gate array.

6. Measurement or protective device according to one of Claims 3 to 5,
**characterized in that**
the communication unit is configured in such a manner that it uses the phase-conductor-related samples applied to the internal port of one network connection to form sampling-time-related messages and outputs the latter to the internal port of the other network connection.

7. Measurement or protective device according to Claim 6,
**characterized in that**
the communication unit is configured in such a manner that it reduces the sampling rate of the phase-conductor-related samples applied to the internal port of one network connection.

8. Measurement or protective device according to Claim 7,
**characterized in that**
the communication unit is configured in such a manner that it reduces the sampling rate of the phase-conductor-related samples applied to the internal port of one network connection by using only every n-th sample further and leaving all remaining samples out of consideration, n being greater than two.

9. Measurement or protective device according to Claim 6,
**characterized in that**
the communication unit is configured in such a manner that it uses the phase-conductor-related samples applied to the internal port of one network connection to form pointer values and uses the latter to form the sampling-time-related messages.

10. Measurement or protective device according to one of Claims 3 to 9,
**characterized in that**
the communication unit is configured in such a manner that it subjects the phase-conductor-related samples applied to the internal port of one network connection to a renewed sampling operation.

11. Measurement or protective device according to Claim 10,
**characterized in that**
the communication unit is configured in such a manner that it uses the phase-conductor-related samples applied to the internal port of one network connection to reconstruct the temporal profile of the electrical signal sampled by the measurement transducer (250), resamples the reconstructed signal at a second sampling rate which differs from the original sampling rate, uses these new samples formed in this manner to form the messages and outputs these messages (Ts) at the internal port of the other network connection.

12. Measurement or protective device according to one of the preceding claims,
**characterized in that**
the communication unit has a digital signal processor (500) for forming the sampling-time-related messages (Ts).

13. Measurement or protective device according to one of the preceding claims,
**characterized in that**
one interface and/or the further interface operate(s) such that it/they is/are compatible with the real-time Ethernet standard, the IEC 61850 standard and/or the IEEE 1588 standard.

14. Measurement or protective device according to one of the preceding claims,
**characterized in that**
with regard to the information relating to the samples, the communication unit is configured in such a manner that it forms the messages in accordance with the rules of the IEC 61850 standard.

15. Measurement or protective device according to one of the preceding claims,
**characterized in that**
with regard to all other information, apart from the information relating to the samples, the communication unit is configured in such a manner that it forms the messages in accordance with the IEC 61850-8-1 standard.

16. Measurement or protective device according to one of the preceding claims,
**characterized in that**
the two network connections are suitable for connection to a real-time Ethernet ring.

17. Protective system (200) having a measurement or protective device (230) according to one of the preceding claims, a measurement transducer (250) and a superordinate data bus (220),
**characterized in that**
- the two external ports (330, 340) of one 3-port network connection (310) of the measurement or protective device (230) are connected to the measurement transducer (250) by means of a process bus (240), and the two external ports (400, 410) of another 3-port network connection (320) of the measurement or protective device (230) are connected to a station bus (220) as a superordinate data bus.

## Revendications

1. Appareil ( 230 ) de mesure ou de protection
- comprenant une interface ( 350 ) pour ménager une liaison avec au moins un transducteur ( 250 ) et une autre interface ( 420 ) de raccordement à un bus ( 220 ) de données supérieur hiérarchiquement,
- dans lequel il y a, dans l'appareil ( 230 ) de mesure ou de protection, une unité ( 300 ) de communication en liaison avec les deux interfaces ( 350, 420 ), **caractérisé en ce que** l'unité ( 300 ) de communication peut être reliée au transducteur ( 250 ), par l'intermédiaire de l'une des interfaces ( 350 ), pour la réception de télégrammes ( Tp ) de valeurs d'échantillonnage contenant des valeurs ( U, I ) d'échantillonnage se rapportant à un conducteur de phase, et au bus ( 220 ) de données supérieur hiérarchiquement par l'autre interface ( 420 ), pour la transmission de télégrammes ( Ts ) se rapportant à l'instant d'échantillonnage et les valeurs ( U, I ) d'échantillonnage se rapportant au conducteur de phase du transducteur ( 250 ) forment des télégrammes ( Ts ) se rapportant à l'instant d'échantillonnage et ceux-ci sont transmis au bus ( 220 ) de données supérieur hiérarchiquement.

2. Appareil de mesure ou de protection suivant la revendication 1,
**caractérisé en ce que**
les deux interfaces forment des interfaces de bus de données.

3. Appareil de mesure ou de protection suivant la revendication 2,
**caractérisé en ce que**
- l'appareil de mesure ou de protection comporte des circuits ( 310, 320 ) de réseau à 3 accès, ayant respectivement deux accès extérieurs et un accès intérieur,
- dans lequel les deux accès ( 330, 340 ) extérieurs de l'un des circuits ( 320 ) de réseau à 3 accès forment l'une des interfaces ( 350 ) et les deux autres accès ( 400, 410 ) extérieurs de l'autre circuit ( 320 ) de réseau à 3 accès forment l'autre interface ( 420 ) et
- dans lequel les deux accès ( 360, 430 ) intérieurs des deux circuits de réseau à 3 accès sont reliés à l'unité ( 300 ) de communication.

4. Appareil de mesure ou de protection suivant la revendication 3,
**caractérisé en ce que**
les deux accès ( 330, 340 ) extérieurs de l'un des circuits ( 320 ) de réseau sont conçus pour le raccordement à un bus ( 240 ) de processus et les deux accès ( 400, 410 ) extérieurs de l'autre circuit ( 320 ) de réseau sont conçus pour le raccordement à un bus ( 220 ) de station.

5. Appareil de mesure ou de protection suivant l'une des revendications précédentes,
**caractérisé en ce que**
l'unité de communication et les deux circuits de réseau sont intégrés dans un gatearray pouvant être programmé librement.

6. Appareil de mesure ou de protection suivant l'une des revendications 3 à 5,
**caractérisé en ce que**
l'unité de communication est telle, qu'elle forme avec les valeurs d'échantillonnage, rapportent au conducteur de phase présentes sur l'accès intérieur de l'un des circuits de réseau, des télégrammes se rapportant à l'instant d'échantillonnage et émet ceux-ci sur l'autre accès intérieur de l'autre circuit de réseau.

7. Appareil de mesure ou de protection suivant la revendication 6,
**caractérisé en ce que**
l'unité de communication est telle qu'elle réduit les fréquences d'échantillonnage des valeurs d'échantillonnage se rapportant au conducteur de phase présentes sur l'accès intérieur de l'un des circuits de réseau.

8. Appareil de mesure ou de protection suivant la revendication 7,
**caractérisé en ce que**
l'unité de communication est telle qu'elle réduit les fréquences d'échantillonnage des valeurs d'échantillonnage se rapportant au conducteur de phase présentes sur l'accès intérieur de l'un des circuits de réseau, en continuant à utiliser exclusivement une valeur d'échantillonnage sur n et en ne tenant pas compte de toutes les autres valeurs d'échantillonnage, n étant plus grand que deux.

9. Appareil de mesure ou de protection suivant la revendication 6,
**caractérisé en ce que**
l'unité de communication est telle qu'elle forme avec les valeurs d'échantillonnage se rapportant au conducteur de phase présentes sur l'accès intérieur de l'un des circuits de réseau, des valeurs de vecteur et tire parti de ceux-ci pour la formation des télégrammes se rapportant aux instants d'échantillonnage.

10. Appareil de mesure ou de protection suivant l'une des revendications 3 à 9,
**caractérisé en ce que**
l'unité de communication est telle qu'elle soumet à une opération d'échantillonnage renouvelée les valeurs d'échantillonnage se rapportant au conducteur de phase présentes sur l'accès intérieur de l'un des circuits de réseau.

11. Appareil de mesure ou de protection suivant la revendication 10,
**caractérisé en ce que**
l'unité de communication est telle qu'elle reconstruit, avec les valeurs d'échantillonnage se rapportant au conducteur de phase présentes sur l'accès intérieur de l'un des circuits de réseau, la variation dans le temps du signal électrique échantillonné par le transducteur ( 250 ), échantillonne à nouveau le signal reconstruit à une deuxième fréquence d'échantillonnage se distinguant de la fréquence d'échantillonnage initiale, tire parti de ces valeurs d'échantillonnage nouvelles ainsi formées pour la formation de télégrammes et émet ces télégrammes ( Ts ) sur l'autre accès intérieur de l'autre circuit de réseau.

12. Appareil de mesure ou de protection suivant l'une des revendications précédentes,
**caractérisé en ce que**
l'unité de communication comporte un processeur ( 500 ) numérique de signal pour la formation des télégrammes ( Ts ) se rapportant aux instants d'échantillonnage.

13. Appareil de mesure ou de protection suivant l'une des revendications précédentes,
**caractérisé en ce que**
l'une et/ou l'autre interface fonctionne de manière compatible avec la norme real-time-ethernet, avec la norme IEC 61850 et/ou avec la norme IEEE 1588.

14. Appareil de mesure ou de protection suivant l'une des revendications précédentes,
**caractérisé en ce que**
l'unité de communication est telle qu'elle effectue la formation des télégrammes, suivant les règles de la norme IEC 61850, en tenant compte des informations concernant les valeurs d'échantillonnage.

15. Appareil de mesure ou de protection suivant l'une des revendications précédentes,
**caractérisé en ce que**
l'unité de communication est telle qu'elle effectue la formation des télégrammes, suivant la norme EIC 61850-8-1, en tenant compte de toutes les autres informations, à l'exception des informations concernant les valeurs d'échantillonnage.

16. Appareil de mesure ou de protection suivant l'une des revendications précédentes,
**caractérisé en ce que**
les deux circuits de réseau sont appropriés au raccordement à un anneau real-time-ethernet.

17. Système ( 200 ) de protection, comprenant un appareil ( 230 ) de mesure ou de protection suivant l'une des revendications précédentes, un transducteur ( 250 ) et un bus ( 220 ) de données supérieures hiérarchiquement,
**caractérisé en ce que**
- l'appareil ( 230 ) de mesure ou de protection est relié, par ses deux accès ( 330, 340 ) extérieurs d'un circuit ( 310 ) de réseau à 3 accès, par l'intermédiaire d'un bus ( 240 ) de processus au transducteur ( 250 ) et par ses deux accès ( 400, 410 ) extérieurs d'un autre circuit ( 320 ) de réseau à 3 accès, à un bus ( 220 ) de station en tant que bus de données supérieur hiérarchiquement.
